# EUROPEAN PATENT APPLICATION

(11) **EP 2 246 510 A1**
(43) Date of publication of application: **03.11.2010**
(21) Application number: 10161097.0
(22) Date of filing: 26.04.2010
(51) Int. Cl.: E05F 1/10, F16F 1/26

(54) **Servo system for a leaf**

(30) Priority: 28.04.2009 IT TV20090079
(71) Applicant: Girotto, Adriano, 31027 Spresiano (IT); Bortoluzzi Sistemi, 32100 Belluno (IT)
(72) Inventor: Girotto, Adriano, 31027, Spresiano (IT)

(57) **Abstract**

To improve the motion smoothness of a leaf articulated on a frame of a piece of furniture a servo system is presented comprising resilient means connected between the frame and the leaf to exert a supporting force on the leaf and to assist its lifting by a user. The resilient means comprise an elongated elastic element (50), one end (P1) of which is hinged to the leaf and the other end (P2) to the frame, the element being mounted bent with respect to an idle undeformed configuration, so that its ends, tending to elastically regain the undeformed configuration, exert a thrust force between the leaf and the frame.

## Description

The present invention relates to a servo drive system for an articulated leaf on a frame of a piece of furniture.

A well-known system to servo the opening movement of leaves of furniture is to use resilient means connected between the frame and the leaf to exert a supporting force on the leaf and favour the lifting thereof by a user. Such resilient means often consist of gas springs, those with a sliding piston.

The fundamental merit of gas springs is that they can develop a force virtually constant and independent of the position of the piston. This ensures a smooth movement of the leaf while opening and closing, without annoying and not very controllable accelerations.

The disadvantage of gas springs, however, is undoubtedly the cost. Secondly, the possible loss of gas and therefore efficiency of the spring.

The object of the invention is to find an alternative to gas springs, maintaining the advantages of linearity and fluidity of movement.

Such an object is achieved by a servo system for a leaf articulated on a frame of a piece of furniture, comprising resilient means connected between the frame and the leaf to exert a supporting force on the leaf and to assist its lifting by a user, **characterized in that** the resilient means comprise an elongated elastic element, one end of which is hinged to the leaf and the other end to the frame, the element being mounted bent with respect to an idle undeformed configuration, so that its ends, tending to elastically regain the undeformed configuration, exert a thrust force between the leaf and the frame.

In a preferred variant, the elongated element is a helical spring. The particular structure of the spring gives the unexpected technical effect that the thrust force on the leaf is almost constant along the travel of the leaf. The spring may be a cylindrical or conical spring, advantageously a commercial one.

Preferably, the system may comprise stop means for limiting the maximum straightening angle of the elongated member or of the spring, so as to define precisely the stroke of the leaf.

Preferably, the system may comprise damping means adapted to dampen the movement of the elongated member, in order to obtain a smoother movement for the leaf.

The invention also refers to a method for servoing a leaf articulated on a frame of a piece of furniture by exerting a supporting force on the leaf and assisting its lifting by a user, characterized by bending an elongated member with respect to an undeformed idle configuration and mounting it with one end hinged to the leaf and the other end to the frame, so that its ends, tending to elastically regain the undeformed configuration, exert a thrust force between the leaf and the frame.

Preferably, in the method as elongated member a helical spring is used.

As a further variant, the spring may also be a rubber element, preferably particularly elastic (eg. Polyurethane rubber for molds), the effect would be identical.

Now a preferred embodiment of the invention is described, with reference to the drawings in which
Figure 1 shows a piece of furniture with an open leaf;
Figure 2 shows the piece of furniture in Fig. 1 with the leaf closed;
Figure 3 shows a cross-section a compressed spring and deformed to take a C shape;
Figure 4 shows a bottom view of the spring in Fig. 3 in idle position;
Figure 5 shows a front view of the spring in Fig. 4;
Figure 6 shows with an exemplary diagram the principle of the invention for a curved spring;
Figure 7 shows with an exemplary diagram the principle of the invention for the spring of Fig. 6 much less curved, almost straight;
Figure 8 shows an enlarged detail in the dashed circle in Fig. 7.

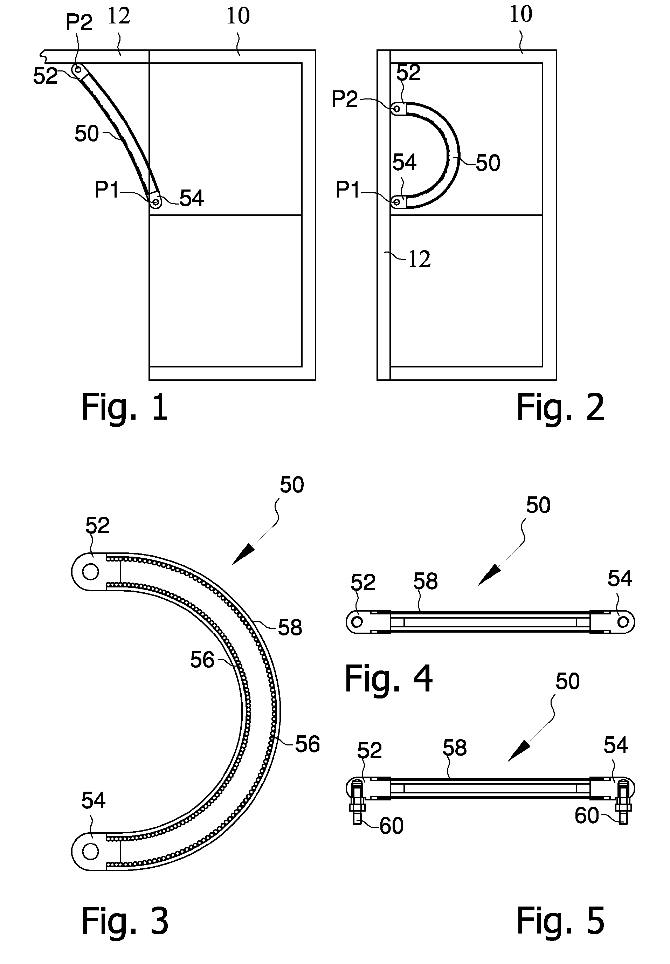

Fig 1 and 2 show schematically the positioning of an elongated element 50 for servoing the opening and closing movements of a leaf 12 hinged to its ends P1, P2 (or fulcrums) on a piece of furniture 10. When the leaf 12 is closed the element 50 is deformed and roughly bent as a C, when the leaf 12 is open the element 50 is almost completely flat and straight. The element 50 is a resilient element, which at rest is straight and tends to return elastically so if it is bent as in Fig. 1 exerting a force at its ends P1, P2.

The element 50 in this example is in the form of a helical spring, for example cylindrical and with traction, preferably with pre-compressed loops but one can also use a compression spring. Such a spring with loops 56 is shown curved in Fig. 3, and has at the ends two eyelets 52, 54 (or even heads with blind hole) for the hinging to the piece of furniture 10, and a coating 58. The coating 58 can be formed with various rubbery materials such as silicon or polyurethane or other, generally very resilient. In the hole of the heads 52 a pin 60 can be inserted, to be connected to the respective part of the piece of furniture 10.

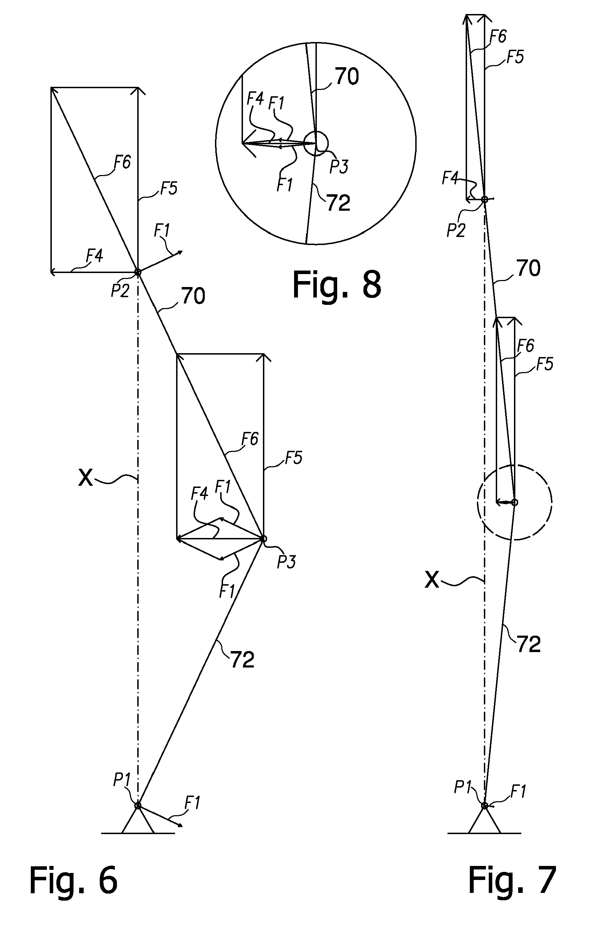

See now fig 6 and 7. A characteristic of element 50, and especially in the form of a spring, is to be able to release between the ends P1, P2 a force almost constant and independent of the position of the leaf 12, as a gas spring would.

To explain this surprising effect, one must imagine the spring 50 as consisting of many (theoretically infinite) segments hinged together elastically, of which for simplicity Fig. 6 and 7 show only two, indicated by 70 and 72, and hinged together at the point P3. For the following explanation it is enough. In practice, the spring 50 is reduced to a knee kinematism, being actually composed of much more segments, but with the same functioning. The end P1 is hinged to the piece of furniture 10, the other P2 is free to also translate.

When the spring 50 is in a very distorted position (Fig. 6) its ends P1, P2 tend to diverge, and to exert a force (see vector F1). Each force F1 has an equal reaction force F1 at the point P3, and the two reactions compose in the resulting force F4 which tends to draw the center of the spring 50 to an X-axis passing through P1 and P2. The force F4 can be divided into components F6, along the segment 70 (the other is bound with fixed hinge), and F5, parallel to the axis X. F6 is then applied also at P2, where it acts along the X axis with the component F5 to support the leaf. Figure 7 shows a second position of the spring 50, much less curved. Forces F1 are now clearly smaller, as is then F4 (see zoom in Fig. 8). However, even if the resulting force F4 is decreased, is increased the angle it forms with the segment 70, and therefore the component F5 along the X axis does not change much compared to the case of fig. 6. It is clear then how the spring element according to the invention can easily obtain a force F5 (which is that which supports the leaf) almost constant throughout the leaf stroke.

Stoppers or equivalent means can be used to limit the maximum angle of straightening for the element 50. For example, stoppers mounted on the fulcrums, where the stoppers may be e.g. teeth on pins 60 which abuts on teeth in the heads 52, 54 in order to oppose to a further rotation thereof. The stoppers, however, are not essential, because it may be the same leaf to limit that angle. Another possibility is to use a brake device inside the spring 50. One could also mount a viscous brake on either or both fulcrums to control the speed of rotation of heads 52, 54.

## Claims

1. Servo system for a leaf (12) articulated on a frame of a piece of furniture (10), comprising resilient means connected between the frame and the leaf to exert a supporting force on the leaf and to assist its lifting by a user,
**characterized in that**
the resilient means comprise an elongated elastic element (50),
one end (P1) of which is hinged to the leaf and the other end (P2) to the frame, the element being mounted bent with respect to an idle undeformed configuration, so that its ends, tending to elastically regain the undeformed configuration, exert a thrust force between the leaf and the frame.

2. System according to claim 1, in which the elongated element is an helical spring (50).

3. System according to claim 2, in which said spring is a cylindrical or conical spring.

4. System according to any one of the preceding claims, comprising two head-members (52, 54) mounted at the ends of the elongated member adapted to support or to receive a hinging pin (60) to the leaf or to the frame.

5. System according to any one of the preceding claims, comprising a sleeve or sheath (58) arranged as a cover over the elongated member.

6. System according to claim 5, in which the sleeve or sheath is made in rubbery material or polyurethane or silicone.

7. System according to any one of the preceding claims, comprising stop means for limiting the maximum straightening angle of the elongated member.

8. System according to any one of the preceding claims, comprising damping means to dampen the movement of the elongated member.

9. A method for servoing a leaf (12) articulated on a chassis of a piece of furniture (10) by exerting a supporting force on the leaf and assisting its lifting by a user, **characterized by** bending an elongated member (50) with respect to an undeformed idle configuration and mounting it with one end hinged to the leaf and the other end to the frame, so that its ends, tending to elastically regain the undeformed configuration, exert a thrust force between the leaf and the frame.

10. Method according to claim 9, in which as elongated member a helical spring (50) is used.
